# EUROPEAN PATENT APPLICATION

(11) **EP 1 832 369 A1**
(43) Date of publication of application: **12.09.2007**
(21) Application number: 05791962.3
(22) Date of filing: 13.09.2005
(51) Int. Cl.: B23D 61/12, B23D 65/00, A22B 5/20, B23K 26/00, B23K 15/00

(54) **STAINLESS STEEL BAND SAW FOR CUTTING AND QUARTERING FOOD PRODUCTS, SUCH AS MEAT, FISH AND SIMILAR**

(30) Priority: 13.09.2004 ES 200402181
(71) Applicant: Gallego Cozar, Amable, 02080 Albacete (ES)
(72) Inventor: Gallego Cozar, Amable, 02080 Albacete (ES)
(74) Representative: Gonzalez-Mogena Gonzalez, Inigo
(86) International application number: PCT/ES2005/000492
(87) International publication number: WO 2006/037821

(57) **Abstract**

The invention relates to stainless steel band saw which is used to cut and quarter food products, such as meet, fish and similar. The invention comprises: a stainless steel laminar body (2) in the form of a trip or similar, and a wire element or similar which is made from high-speed steel (3), said two bodies (2 and 3) being joined by means of electron bombardment or laser welding, such as to form a single piece (10). According to the invention, the high-speed steel zone (3) is subsequently subjected to swaging, milling or similar in order to produce the toothing thereof, after which the cutting line is quenched and tempered.

## Description

### SUBJECT OF THE INVENTION

This specification refers to the request for an invention patent for a stainless steel band saw for cutting and quartering food products, such as meat, fish, frozen vegetables and similar. Its aim is to take the form of a band saw made by joining a stainless steel body with another steel body with another high-speed body together (which may have different characteristics) by means of electron bombardment or laser welding. In this way, a completely new band saw in the market is produced, given that it provides a solution to the problem of the current models as regards safety and gives the band saw greater effectiveness and durability in cutting than currently exists in the market.

### TECHNICAL FIELD

This invention is intended for use in the industry dedicated to the production of machinery, devices and auxiliary elements for cutting, transforming and quartering frozen food products.

### BACKGROUND OF THE INVENTION

The applicant is aware that at the current time:
- A stainless steel band saw exists, but its life-span, cutting and welding qualities (basic attributes of an acceptable band saw in the market) leaves much to be desired. The stainless steel that can be welded with ease (austenitic) lacks the sufficient hardness to produce a long cutting band saw. Furthermore, the stainless steel that has cutting properties (martensitic) such as that used in knife manufacturing, is very difficult to weld and not very flexible.
- The concept of a bimetallic band saw can be found in the band saws used for cutting metals. These are produced by means of the technique known as electron bombardment or laser welding by which high-speed steel is joined with a carbon steel alloy that will form the back of the band saw.

Furthermore, the production process for this kind of band saw is as follows:
1. The two types of metal are joined longitudinally. On one side the high-speed steel wire (variable characteristics), and on the other the strip which is made from carbon steel. This process is carried out in low hardness of the two materials being joined, with the aim of lengthening the life-span of the cutter that mechanises the saw teeth.
2. Mechanisation and setting of the different kinds of saw teeth.
3. Quenching and setting of the different kinds of saw teeth.
4. Quenching and tempering of the whole belt strip, acquiring different levels of hardness to the high-speed steel wire and the belt or back made from carbon steel.

This produces an optimum band saw for cutting metals.

It is very important to highlight the fact that this production process for band saws as they are developed would be impossible to apply with stainless steel, as in the quenching phase of the process it would suffer breakages, deformations and/or distempering of the stainless steel.

Consequently, therefore, the invention that is described in this specification succeeds in creating a product to be developed as a 99% stainless steel band saw due to the fact that it has bimetallic characteristics. This application will cover the two basic problems mentioned above (safety) and that of length of the cut.

The applicant is not aware of the existence at the current time of another invention with the characteristics described in this specification.

### DESCRIPTION OF THE INVENTION

The stainless steel band saw which is used to cut and quarter food products, such as meat, fish and similar which the invention proposes, constitutes in its structure and makeup a bimetallic band saw produced with techniques known as electron bombardment or laser welding, by which means high speed steel (of variable characteristics) and an edged stainless steel wire belt are joined to form the back of the band saw.

The austenitic stainless steel strip or body, unlike in the production of band saws for metals, is already introduced with the desired hardness before the joining of the wire or contributing material. It is necessary to point out that this hardness in austenitic stainless steels is not obtained by means of thermal processes, but, rather, by mechanical processes through flattening and stretching.

The high-speed steel wire is joined to the stainless steel with low hardness to avoid cracking during the toothing and setting phase of the production process according to the different kinds of saw teeth that are required: the half-moon microtooth2, used for fresh meat or the band saw tooth for frozen food and bones.

Once the saw teeth have been mechanised and finished, quenching and tempering takes place only on the contributing material, that is to say the part made from high-speed steel or similar, producing in this way a band saw that is sufficiently flexible to avoid breakages and at the same time highly resistant to wear during cutting due to the high degree of hardness that the ends of the saw teeth acquire.

### DESCRIPTION OF THE ACCOMPANYING DRAWINGS

To complement this description and with the aim of facilitating a better understanding of the characteristics of the invention, this specification is accompanied by a set of drawings in which, for purposes of illustration and without limitation, the following are shown:

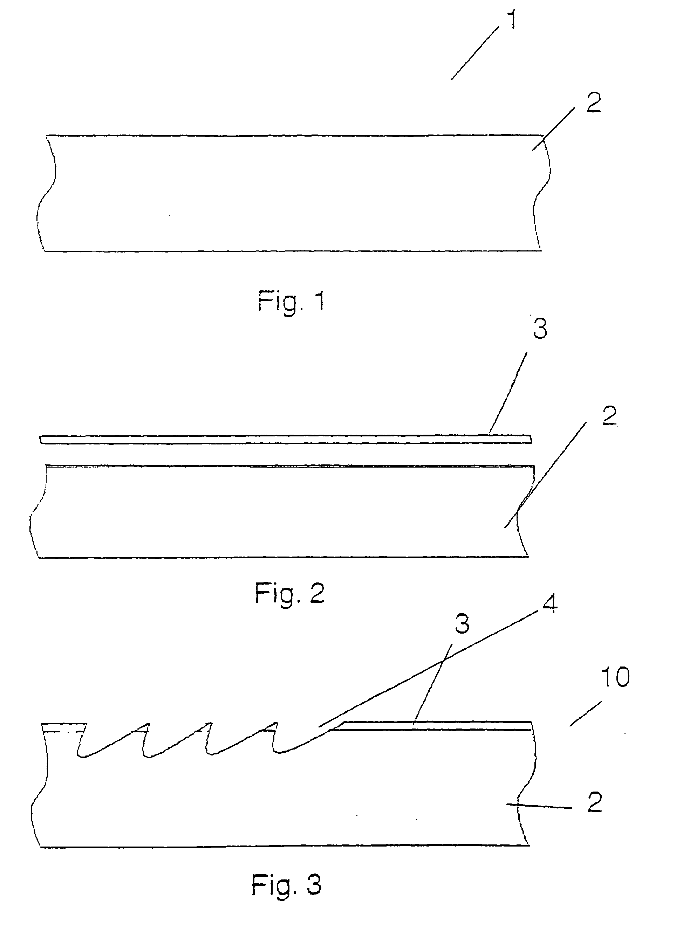

Figure 1 - A level view of the stainless steel sheet used for the production together with the wire element or similar fixed on one of its greater sides, on which toothing or mechanisation would take place in order to obtain a stainless steel band saw for use in cutting and quartering meat, fish and similar products.
Figure 2 - A view of the subject shown in figure 1, on one of the greater sides of which the band and the high-speed steel wire element or similar will be fixed by conventional means.
Figure 3 - A view of the finished subject of the invention, on which the elements shown in figures 1 and 2 have been joined, and its subsequent toothing and mechanisation, producing a stainless steel band saw which is used to cut and quarter meat, fish and similar products.

### DESCRIPTION OF THE PREFERRED EMBODIMENT

Before describing and fully producing the invention, it should be remembered that authentic stainless steel (2) made into a laminar piece with the desired hardness obtained by means of mechanical processes, that is to say flattening, stretching, beating, etc., then has joined to it by means of the technique of electron bombardment or laser welding a soft high-speed steel wire or similar (3) and, once joining has been achieved, the teeth of the band saw (10) are produced by joining elements (2) and (3) by means of laser welding or electron bombardment.

Once developed, the function of the band saw would be limited to forming a band saw body in accordance with the safety regulations applicable to these elements.

Consequently, the invention in question is made up of a band, sheet or strip (2) made in stainless steel, to which a wire or similar body (3), made from high-speed steel, is fixed by means of electron bombardment or laser welding, thereby forming a monoblock body that, by way of the aforementioned electron bombardment or laser welding (4), would result in a monoblock body (10) that would subsequently create the possibility of carrying out toothing or mechanisation on the longitudinal zone formed by the high-speed steel body (3), which would result in the creation of a cutting line in accordance with the required characteristics of the invention.

## Claims

1. Stainless steel band saw which is used to cut and quarter food products, such as meat, fish and similar, formed by a stainless steel body (2), a strip or similar, unique because on one of the greater sides of the body (2), made in stainless steel, a second body with a high-speed steel alloy intended to form the belt saw and especially in the cutting zone is joined by means of electron bombardment or laser welding.

2. Stainless steel band saw which is used to cut and quarter food products, such as meat, fish and similar, as in the previous claim, unique because on the outside of the body (3) made from high-speed steel joined to the body (2) mechanisation or swaging of the cutting zone takes place by means of milling or different application producing different kinds of toothing.
